(19) Europäisches Patentamt
European Patent Office
Office européen des brevets

(11) EP 0 752 454 B1

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.[7]: **C09D 5/24**, C08G 61/12, C08L 65/00

(21) Anmeldenummer: **96109920.7**

(22) Anmeldetag: **20.06.1996**

(54) **Kratzfeste leitfähige Beschichtungen**

Scratch-resistant conductive coatings

Revêtements conducteurs résistant à l'abrasion

(84) Benannte Vertragsstaaten:
**DE ES FI FR GB IE IT SE**

(30) Priorität: **03.07.1995 DE 19524132**

(43) Veröffentlichungstag der Anmeldung:
**08.01.1997 Patentblatt 1997/02**

(73) Patentinhaber: **BAYER AG**
**51368 Leverkusen (DE)**

(72) Erfinder:
- **Friedrich, Jonas, Dr.**
  **52066 Aachen (DE)**
- **Klaus, Lerch, Dr.**
  **47800 Krefeld (DE)**
- **Wolfgang, Fischer, Dr.**
  **40668 Meerbusch (DE)**

(56) Entgegenhaltungen:
**EP-A- 0 003 337**
**EP-A- 0 440 957**
**DE-A- 2 651 507**
**DE-A- 3 706 355**
**DE-A- 4 229 192**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine haftfeste, kratzfeste leitfähige Beschichtung für nichtleitende Formteile z.B. aus Kunststoff auf Basis von Polythiophenzubereitungen.

Aus der EP-A 440 957 ist bekannt, Zubereitungen von Polythiophenen, die Polyanionen enthalten, zur Herstellung leitfähiger Beschichtungen einzusetzen.

Es hat sich aber gezeigt, daß diese Beschichtungen für einige Anwendungen in der Praxis nicht ausreichend kratzfest sind.

Es wurde gefunden, daß durch Kombination von Polythiophenzubereitungen mit durch ionisierende Strahlung (wie UV- oder Elektrostrahl), härtenden Beschichtungsmitteln eine bessere Kratzfestigkeit erreicht wird.

Geeignete Polythiophenzubereitungen enthalten Polythiophen-Salze der Form

$$\text{Polythiophen}^{\oplus}\ \text{An}^{\ominus}$$

worin das Polythiophen positiv geladene und ungeladene wiederkehrende Einheiten

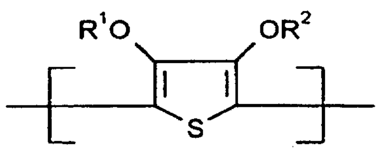

enthält und

$R_1$ und $R_2$ unabhängig voneinander für Wasserstoff oder eine $C_1$-$C_4$-Alkylgruppe stehen oder zusammen einen gegebenenfalls substituierten $C_1$-$C_4$-Alkylen-Rest, vorzugsweise einen gegebenenfalls durch Alkylgruppen substituierten Methylen-, einen gegebenenfalls durch $C_1$-$C_{12}$-Alkyl- oder Phenylgruppen substituierten Ethylen-1,2-Rest, einen Propylen-1,3-Rest oder einen Cyclohexylen-1,2-Rest bilden, und

$An^{\ominus}$ ein Polyanion bedeutet.

$R_1$ und $R_2$ sind vorzugsweise Methyl-und Ethylgruppen.

Als Vertreter der gegebenenfalls substituierten $C_1$-$C_4$-Alkylenreste, die $R_1$ und $R_2$ zusammen bilden können, seien vorzugsweise die Alkylen-1,2-Reste genannt, die sich von den 1,2-Dibrom-alkanen ableiten, wie sie beim Bromieren von $\alpha$-Olefinen, wie Ethen, Propen-1, Hexen-1, Octen-1, Decen-1, Dodecen-1 und Styrol erhältlich sind; außerdem seien genannt der Cyclohexylen-1,2-, Butylen-2,3, 2,3-Dimethyl-butylen-2,3- und Pentylen-2,3-Rest.

Bevorzugte Reste für $R_1$ und $R_2$ gemeinsam sind der Methylen-, Ethylen-1,2- und Propylen-1,3-Rest, besonders bevorzugt ist der Ethylen-1,2-Rest.

Als Polyanionen dienen die Anionen von polymeren Carbonsäuren, wie Polyacrylsäuren, Polymethacrylsäuren oder Polymaleinsäuren und polymeren Sulfonsäuren, wie Polystyrolsulfonsäuren und Polyvinylsulfonsäuren. Diese Polycarbonund -sulfonsäuren können auch Copolymere von Vinylcarbon- und Vinylsulfonsäuren mit anderen polymerisierbaren Monomeren, wie Acrylsäureestern und Styrol sein.

Das Molekulargewicht $\overline{M}_n$ der die Polyanionen liefernden Polysäuren beträgt vorzugsweise 1 000 bis 2 000 000, besonders bevorzugt 2 000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben-Weyl, Methoden der organischen Chemie, Bd. E 20 Makromolekulare Stoffe, Teil 2, (1987), S. 1141 u.f.).

Anstelle der für die Bildung der erfindungsgemäßen Zubereitungen aus Polythiophenen und Polyanionen erforderlichen freien Polysäuren, kann man auch Gemische aus Alkalisalzen oder Polysäuren und entsprechenden Mengen an Monosäuren einsetzen.

Die Zubereitungen können echte Lösungen, kolloidale Lösungen oder feinteilige Dispersionen sein. Die Herstellung dieser Zubereitungen ist in EP-A 0 440 957 beschrieben.

Als Lösungsmittel oder Dispersionsmedium der Polythiophen-Zubereitungen kommen neben Wasser auch andere protische Lösungsmittel in Betracht, z.B. niedere Alkohole wie Methanol, Ethanol und Isopropanol sowie Mischungen von Wasser mit niederen Alkoholen und anderen mit Wasser mischbaren organischen Lösungen wie Aceton in Betracht.

Die Polythiophen-Zubereitungen können niedermolekulare Netzmittel oder Dispergatoren enthalten, z.B. anionische Tenside wie Natriumdodecylsulfat, kationische Tenside wie Cetyltrimethylammoniumbromid und nicht-ionische Tenside wie Alkylphenol-polyethylenoxid-Addukte, die vor, während oder nach der Polymerisation zugemischt werden. Das Zumischen nicht-ionischer Tenside vor der Polymerisation ist bevorzugt.

Der Begriff "Dispersion" schließt ebenso Makrodispersionen mit mittleren Teilchengrößen von mehr als 100 nm wie kolloidale Dispersionen mit mittleren Teilchengrößen von Molekülgröße bis zu Molekülagglomeraten mit nicht mehr als 100 nm mittleren Teilchengrößen ein.

Geeignete strahlenhärtbare Beschichtungsmittel sind z.B. (Meth)Acryloylgruppen enthaltende Prepolymere, die mindestens zwei (Meth)Acryloylgruppen, vorzugsweise zwei bis vier (Meth(Meth)acryloylgruppen pro Molekül, enthalten und sich von Polyestern, Polyethern, Polyepoxidverbindungen, aliphatischen Polyolen, Polyurethanen und Vinylpolymerisaten ableiten. Derartige (Meth)Acrylatprepolymere sind bekannt und beispielsweise beschrieben in US-PS 2 101 107; 2 413 973; 2 951 758 3 066 112; 3 301 743; 3 368 900; 3 380 831; 3 455 801; 3 469 982; 3 485 732; 3 530 100; 3 551 246; 3 552 986; 3 628 963; 3 660 145; 3 664 861; 3 689 610; 3 719 521; 3 732 107; 3 782 961; 3 840 369; 3 888 830; 4 033 920; 4 081 492; 4 206 025; GB-PS 1 006 587; 1 241 823; 1 241 824; 1 321 372; DE-OS 1 916 499; 2 429 527; 2 534 012; 2 737 406 und 2 853 921.

Bevorzugte (Meth)Acrylatprepolymere sind Polyester(meth)acrylate wie sie durch Azeotropveresterung von Dicarbonsäuren mit di- oder höherfunktionellen Polyolen und (Meth)acrylsäure erhalten werden. Gängige Dicarbonsäuren sind z.B. Phthalsäure und Adipinsäure. Polyole sind z.B. Glykol und Polyethylenglykol, Trimethylolpropan, Glycerin und Pentaerythrit. Umsetzungsprodukte aus Polyepoxiden, z.B. Bisphenol-A-bis-glycidylether mit (Meth) Acrylsäure und Polyurethan(meth)acrylate, wie sie durch Addition von Hydroxyalkyl(meth)acrylat an aromatische oder aliphatische Polyisocyanate und gegebenenfalls weitere Addition an Polyole erhalten werden.

Weiterhin können aminmodifizierte Polyetheracrylate, wie sie gemäß DE-OS 3 706 355 aus aliphatischen primären Aminen und (Meth)-acrylsäureestern von ethoxylierten oder propoxylierten Polyolen erhalten werden, als (Meth)-acryloylgruppen enthaltende Präpolymere eingesetzt werden.

Zur Herstellung dünner Schichten, mit einer Dicke unter 4 µm sind auch kationisch härtende, durch UV-Strahlung aktivierbare Lacksysteme, z.b. auf Epoxid- oder Vinylether-Basis einsetzbar, da bei diesen Systemen auch bei geringen Schichtdicken auf eine Härtung unter Inertgas verzichtet werden kann.

Geeignete Systeme sind z:b. im J.V. Crivello, J.L. Lee und D.A. Coulon, New Monomers for cationic U.V. -Curing, Radiation Curing VI, Conference Proceedings (Sept. 20 bis 23, 1982) Chicago, Illinois, beschrieben und werden z.B. unter der Bezeichnung Cyracure® von der Fa. Union Carbide vertrieben.

Als übliche Hilfsmittel enthalten die erfindungsgemäßen Deckschichtbindemittel reaktive strahlenhärtbare Verdünner oder Mischungen dieser Verdünner. Neben der Funktion als Verdünnungsmittel für das Prepolymere dienen diese Produkte auch zur Variation der mechanischen Eigenschaften, z.B. der Härte des resultierenden Films. Derartige reaktive strahlenhärtbare Verdünner sind beispielsweise Acryl- bzw. Methacrylsäureester, vorzugsweise von ein- bis dreiwertigen Alkoholen oder von deren Oxalkylierungsprodukten, insbesondere von deren Oxethylierungsprodukten. Im Falle der Oxalkylierungsprodukte sind auf 1 Hydroxylgruppe des jeweiligen ein- oder mehrwertigen Alkohols durchschnittlich 0,8 bis 12 Mol Alkylenoxid, wie Ethylenoxid oder Propylenoxid vorzugsweise Ethylenoxid, angelagert worden.

Besonders bevorzugt sind als reaktive strahlenhärtbare Verdünner die Acrylate der zwei- und dreiwertigen Alkohole bzw. ihre Oxethylierungsprodukte.

Namentlich seien beispielhaft genannt: Ethylenglykoldi(meth)acrylat, Di(meth)-acrylate des Diethylenglykols, Triethylenglykols, Tetraethylenglykols und Pentaethylenglykols; Propylenglykol-di(meth)acrylat; Di(meth)acrylate des Di- bis Pentapropylenglykols; Neopentyl-di(meth)acrylat; Butandiol-1,4-di(meth)acrylat, Hexandiol-1,6-di(meth)acrylat, Trimethylolpropan-tri(meth)acrylat, Triacrylate des oxethylierten Trimethylolpropans mit einem Oxethylierungsgrad von 2,5 bis 4 gemäß DE-PS 2 651 507. Reaktive strahlenhärtbare Verdünner sind im Bereich von 0 bis 83 Gew.-%, bezogen auf die Gesamtmenge der polymerisierbaren Bestandteile, enthalten. Die erfindungsgemäßen Decklackrezepturen enthalten als wesentliche Bestandteile als Beschleuniger aminmodifizierte Polyetheracrylate. Diese werden durch Addition von sekundären, aliphatischen Aminen an reaktive Verdünner, die wenigstens zwei (Meth)acryloylgruppen pro Molekül enthalten, erhalten. Geeignete Verbindungen sind in DE 2 346 424 beschrieben.

Im Bindemittel können als Hilfsstoffe 0,001 bis 0,2 Gew.-%, bezogen auf strahlenhärtbare Komponenten, an üblichen Polymerisationsinhibitoren oder Antioxidantien enthalten sein. Derartige Verbindungen sind beispielsweise: 4,4'Bis-(2,6-di-tert.butylphenol), 1,3,5-Trimethyl-2,4,6-tris-(3,5-di-tert.-butyl-4-hydroxy-benzyl)-benzol, 4,4'-Butyliden-bis-(6-tert.-butyl-m-kresol), 3,5-Di-tert.-butyl-4-hydroxybenzylphosphonsäurediethylester, N,N'-Bis-(β-naphthyl)-p-phenylendiamin, N,N'-Bis-(1-methylheptyl)-p-phenylenddiamin, Phenyl-β-naphthylamin, 4,4'-Bis(α,α-dimethylbenzyl)-diphenylamin, 1,3,5-Tris(3,5-di-tert.-butyl-4-hydroxyhydrocinnamoyl)-hexahydro-s-triazin, Hydrochinon, p-Benzochinon, Hydrochinonmonomethylether, 2,5-Di-tert.-butylchinon, Toluhydrochinon, p-tert.-Butylbrenzcatechin, 3-Methylbrenzcatechin, 4-Ethylbrenzcatechin, Chloranil, Naphthochinon, Kupfernaphthenat, Kupferoctoat, Cu(I)Cl/Triphenylphosphit, Cu(I)Cl/Trimethylphosphit, Cu(I)Cl/Trichlorethyl-phosphit, Cu(I)Cl/Tripropylphosphit, p-Nitrosodimethylanilin.

Weiter können im Bindemittel als Hilfsstoffe 0,1 bis 5 Gew.-%, bezogen auf strahlenhärtbare Komponenten vorhanden sein, z.B. Antiabsetzmittel wie Dimethylstearylamin, Stearinsäure, Metällstearate, ein- bis dreiwertige Metalle, Stearylalkohol, die entsprechenden Oleylderivate oder oberflächenaktive Agentien wie hochdisperse Kieselsäure und Gleitmittel wie Silicone.

Die durch ionisierende Strahlung härtenden Bindemittel werden bevorzugt in Form wässriger Dispersionen oder Lösungen mit den Polythiophenzubereitungen eingesetzt. Entsprechende Zubereitungen wässriger durch ionisierende Strahlung härtbarer Bindemittel sind z.B. in EP 3337 und in Farbe und Lack 98 (1992) 165-170 beschrieben.

Die erfindungsgemäßen Mischungen aus Polythiophenzubereitung und durch ionisierende Strahlung härtbarem Bindemittel enthalten zwischen 0,5 und 90 Gew.-%, bevorzugt 5 und 60 Gew.-% Feststoff. Bezogen auf den Feststoffgehalt an Polythiophenzubereitung (100 Gew.-%) enthalten die Mischungen 10 bis 10 000 Gew.-% bevorzugt 50 bis 2 000 Gew.-% durch ionisierende Strahlung härtbarcs Bindemittel.

Die erfindungsgemäßen Mischungen können durch Mischen der Polythiophenzubereitung und des durch ionisierende Strahlung härtbaren Bindemittels hergestellt werden. Es hat sich bewährt das durch ionisierende Strahlung härtbare Bindemittel zuerst in Wasser zu dispergieren und dann mit der Polythiophenzubereitung unter Rühren zu mischen. Das durch ionisierende Strahlung härtbare Bindemittel kann aber auch direkt in der Polythiophenzubereitung dispergiert oder gelöst werden.

Den erfindungsgemäßen Lösungen können wassermischbare Lösungsmittel z.B. Alkohole wie Methanol, Ethanol, Propanol, Isopropanol, Glykole, Ketone wie Aceton, Methylethylketon, Amide wie NN-Dimethylformamid, NN-Dimethylacetamid, N-Methylpyrrolidon zugesetzt werden.

Die erfindungsgemäßen Mischungen können mit bekannten Techniken z.B. Drucken wie Tiefdruck, Flexodruck, Siebdruck oder Aufrakeln, Walzenantrag, Vorhanggießen, aufgebracht werden.

Die Dicke der Beschichtung ist je nach gewünschtem Oberflächenwiderstand nach Abdampfen der Lösungsmittel 0,5 bis 500 µm bevorzugt 3 bis 100 µm.

Die einstellbaren Oberflächenwiderstände der Beschichtungen reichen von $10^{10}$ bis 0,1 Ω/□ bevorzugt $10^8$ bis 100 Ω/□.

Das Lösungsmittel kann nach dem Aufbringen der Lösungen durch Abdampfen bei Raumtemperatur entfernt werden. Zur Erzielung höherer Verarbeitungsgeschwindigkeiten ist es jedoch vorteilhafter, die Lösungsmittel bei erhöhten Temperaturen, z.B. bei Temperaturen bis zu 150°C, bevorzugt 40°C bis zu 100°C, zu entfernen.

Als Substrate, die erfindungsgemäß leitfähig beschichtet werden können, seien genannt: Formkörper und Folien aus Kunststoffen z.B. Polyolefinen wie Polyethylen, Polypropylen, Polyestern wie Polyethylenterephthalat, Polyethylennaphthalat, Polystyrol, Polycarbonat, ABS, Polyacrylaten, Polyacrylnitril, Cellulosederivaten wie Celluloseacetat, Polyamiden, Polyvinylchlorid, gegebenenfalls glasfaserverstärkte Epoxidharzkunststoffe oder deren Copolymere bzw. Blends. Weiterhin können anorganische Formkörper z.B. aus Glas oder Keramik wie Aluminiumoxidkeramik oder Siliciumnitridkeramik leitfähig beschichtet werden.

Der hydrophobe Kunststoffträger wird vor der Beschichtung mit der leitfähigen Schicht gegebenenfalls mit einer oder mehreren Substratschichten versehen, um die Haftung nachfolgend aufgebrachter Schichten zu verbessern. Geeignete Substratschichten für Polyethylenterephthalatträger sind z.B. aus US 3 397 988, 3 649 336, 4 123 278, 4 478 907, GB 1 234 755 und Research Disclosure, Juli 1967, Seite 6 bekannt. Besonders geeignete Substratschichten sind aus Vinylidenpolymeren mit copolymerisierten, ethylenenisch ungesättigten hydrophilen Monomeren, vorzugsweise Itaconsäureeinheiten (US 3 649 336).

Die Herstellung der Polythiophendispersionen oder -lösungen nach EP-OS 440 957 führt zu Produkten, in denen der Gehalt an polymerisiertem Thiophen 5 bis 50 Gew.-%, bezogen auf Gesamtfeststoff, ausmacht. Bei der Herstellung dieser Polythiophendispersionen können zusätzlich bis zu 90 Gew.-%, bezogen auf Gesamtfeststoff, andere Polymerlatices bzw. -dispersionen zugesetzt werden, die saure Gruppen (Salze) wie $-SO_3^-$, -COO-, Phenolat oder $-PO_3^{2-}$ aufweisen. Der Gehalt an sauren Gruppen liegt vorzugsweise über 2 Gew.-%, um eine ausreichende Stabilität der Dispersion oder Lösung zu gewährleisten.

Polymere die für diesen Zweck geeignet sind werden beispielsweise in DE-A 2 541 230, DE-A 2 541 274, DE-A 2 835 856, EP-A 0 014 921, EP-A 0 069 671, EP-A 0 130 115, US-A 4 291 113 beschrieben. Die Polymerdispersionen bzw. Latices können lineare, verzweigte oder vernetzte Polymere enthalten. Die vernetzten Polymere mit hohem Gehalt an sauren Gruppen sind in Wasser quellbar und können in Form sogenannter Mikrogele eingesetzt werden. Derartige Mikrogele werden beispielsweise in US 4 301 240, US 4 677 050 und US 4 147 550 beschrieben.

Gehärtet wird mittels ionisierender Strahlung, gegebenenfalls unter Inertgas, z.B. durch Elektronenstrahlen. Obwohl mit einer Strahlendosis von etwa 0,1 bis 200 kGy gehärtet werden kann, bevorzugt man aus wirtschaftlichen Gründen kontinuierlich arbeitende Beschichtungsanlagen, deren Strahlungsquellen eine Beschleuhigerspannung von 100 bis 500 Kilo-Volt (kV), entsprechend einer Strahlendosis von 10 bis 500 kGy aufweisen. Der Abstand der Elektronenstrahlenquelle von der zu härtenden Schicht beträgt üblicherweise 10 bis 20 cm. Wird die Deckschicht durch UV-Strahlung gehärtet, dann müssen die Deckschichtbindemittel in bekannter Weise noch mit Fotoinitiatoren sowie gegebenenfalls Fotosensibilisatoren versehen werden.

Die anzuwendenden Fotoinitiatoren bzw. Fotosensibilisatoren sind an sich bekannt, und deren Auswahl ist nicht Gegenstand der Erfindung. Ihre Anwendung ist weitgehend begrenzt auf die zweckmäßige Anwendung von UV-Strahlung, jedoch können grundsätzlich auch andere ionisierende Strahlungsarten zur Anwendung gelangen. Brauchbare Fotoinitiatoren bzw. Fotosensibilisatoren sind z.B. Benzophenon, Acetophenon, Benzoin und Methyl-, Ethyl-, Isopropyl-, Butyl- oder Isobutylether von Benzoin, $\alpha$-Hydroxi- bzw. $\alpha$-Aminoarylketone sowie Benzilketale. Diese Substanzen werden im allgemeinen in Konzentrationen von 0,1 bis 7,5 Gew.-%, bezogen auf polymerisierbare Anteile, zugesetzt.

Die erfindungsgemäßen Beschichtungen zeichnen sich durch hohe Transparenz und Kratzfestigkeit aus. Die Beschichtungen werden eingesetzt zur antistatischen bzw. elektrisch leitfähigen Ausrüstung von Kunststoffen. Die beschichteten Kunststoffe weisen deutlich geringere Staubanziehung auf und können z.B. in explosionsgefährdeten Räumen eingesetzt werden. Weiterhin sind die erfindungsgemäß beschichteten Kunststoffe oder Gläser geeignet zur Abschirmung elektromagnetischer Strahlung.

**<u>Beispiel</u>**

Herstellung der 3,4-Polyethylendioxythiophenlösung

20 g freie Polystyrolsulfonsäure (Molekulargewicht $\overline{M}_n$ ca. 40 000), 13,0 g Kaliumperoxidisulfat und 50 mg Eisen(III)-sulfat werden unter Rühren in 2 000 ml Wasser vorgelegt. Unter Rühren werden 5,6 g 3,4-Ethylendioxythiophen zugegeben. Die Lösung wird 24 Stunden bei Raumtemperatur gerührt. Anschließend werden 100 g Anionenaustauscher (Lewatit® MP 62, Bayer AG) und 100 g Kationenaustauscher (Lewatit® S 100, Bayer AG), beide wasserfeucht, zugegeben und 8 Stunden gerührt.
Die Ionenaustauscher werden durch Filtration entfernt. Es wird eine Lösung mit einem Feststoffgehalt von ca. 1,2 Gew.-% erhalten, die gebrauchsfertig ist.

Beschichtung:

10 g der Polythiophenzubereitung mit einem Feststoffgehalt von 1,2 Gew.-% und 2 g einer 50 %igen wässrigen Dispersion eines UV-härtbaren Lackes (Bayhydrol® 850, Bayer AG), die bezogen auf UV-härtbares Bindemittel 2,5 Gew.-% Darocure® 1116 (Ciba Geigy) enthält, werden unter Rühren gemischt. Die homogene Mischung wird mit einem Handrakel in einer Naßfilmdicke von 60 bzw. 100 µm entsprechend einer Trockenfilmdicke von ca. 5,6 bzw. 10 µm auf

a) Glasplatten
b) Polycarbonatfolien

aufgerakelt. Das Lösungsmittel wird in 2 Stunden an der Luft abgedampft und die Beschichtung anschließend durch Bestrahlung mit UV-Strahlung gehärtet. Man erhält klare Schichten, die folgende Eigenschaften aufweisen:

| Trägermaterial | Schichtdicke [µm] | Bleistifthärte | Oberflächenwiderstand [Ω/□] |
|---|---|---|---|
| Glas | 5,6 | >4 H | $2{,}5 * 10^4$ |
| Glas | 10 | >4 H | $1 * 10^4$ |
| Polycarbonat | 5,6 | >4 H | $6 * 10^4$ |
| Polycarbonat | 10 | >4 H | $5 * 10^3$ |

**Patentansprüche**

1. Mischung aus einer Polythiophenzubereitung, die ein Polythiophen-Salz Polythiophen$^{\oplus}$ An$^{\ominus}$ enthält, worin das Polythiophen positiv geladene und ungeladene wiederkehrende Einheiten der Formel

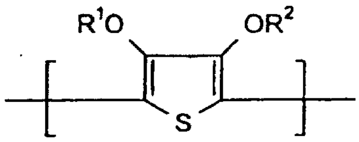

enthält worin

$R_1$ und $R_2$ unabhängig voneinander für Wasserstoff oder eine $C_1$-$C_4$-Alkylgruppe stehen oder zusammen einen gegebenenfalls substituierten $C_1$-$C_4$-Alkylen-Rest, vorzugsweise einen gegebenenfalls durch Alkylgruppen substituierten Methylen-, einen gegebenenfalls durch $C_1$-$C_{12}$-Alkyl- oder Phenylgruppen substituierten Ethylen-1,2-Rest, einen Propylen-1,3-Rest oder einen Cyclohexylen-1,2-Rest bilden, und

$An^{\ominus}$ ein Polyanion bedeutet,

und durch ionisierende Strahlung härtbare Beschichtungsmittel,
wobei durch ionisierende Strahlung härtbare Beschichtungsmittel (Meth)Acryloylgruppen enthaltende Prepolymere sind, welche mindestens zwei (Meth)Acryloylgruppen pro Molekül enthalten.

**2.** Mischung nach Anspruch 1, **dadurch gekennzeichnet, dass** die (Meth)Acryloylgruppen enthaltenden Prepolymere zwei bis vier (Meth)Acryloylgruppen pro Molekül enthalten.

**3.** Mischung nach Anspruch 1 oder 2, **dadurch gekennzeichnet, dass** die (Meth)Acryloylgruppen, enthaltenden Prepolymere sich von Polyestern, Polyethern, Polyepoxidverbindungen, aliphatischen Polyolen, Polyurethanen und Vinylpolymerisaten ableiten.

**4.** Mischung nach wenigstens einem der Ansprüche 1 bis 3, **dadurch gekennzeichnet, dass** die (Meth)Acryloylgruppen enthaltenden Prepolymere Polyester(meth)acrylate, die durch Azeotropveresterung von Dicarbonsäuren mit di- oder höherfünktionellen Polyolen und (Meth)acrylsäure erhalten werden, Umsetzungsprodukte aus Polyepoxiden mit (Meth)Acrylsäure, Polyurethan(meth)acrylate oder aminmodifizierte Polyetheracrylate sind.

**5.** Mischung nach wenigstens einem der Ansprüche 1 bis 4, **dadurch gekennzeichnet, dass** die durch ionisierende Strahlung härtbaren Beschichtungsmittel reaktive ebenfalls strahlenhärtbare Verdünner als Hilfsmittel enthalten.

**6.** Mischung nach Anspruch 5, **dadurch gekennzeichnet, dass** die reaktiven ebenfalls strahlenhärtbaren Verdünner Acryl- oder Methacrylsäureester von ein- bis dreiwertigen Alkoholen oder von deren Oxalkylierungsprodukten sind.

**7.** Mischung nach wenigstens einem der Ansprüche 1 bis 6, **dadurch gekennzeichnet, dass** sie als Lösungsmittel Wasser enthält.

**8.** Verwendung der Mischung nach wenigstens einem der Ansprüche 1 bis 7 zur Herstellung kratzfester elektrisch leitfähiger Beschichtungen.

**9.** Verwendung der Mischung nach wenigstens einem der Ansprüche, 1 bis 7 zur Herstellung kratzfester elektrisch leitfähiger Beschichtungen, **dadurch gekennzeichnet, dass** sie durch ionisierende Strahlung gehärtet wurden.

**10.** Verfahren zur Herstellung einer kratzfesten elektrisch leitfähigen Beschichtung, **dadurch gekennzeichnet, dass**

- eine Mischung gemäß wenigstens einem der Ansprüche 1 bis 7 durch Mischen der Polythiophenzubereitung und des durch ionisierende Strahlung härtbaren Beschichtungsmittels hergestellt wird
- die erhaltene Mischung dann auf ein Substrat aufgebracht wird und
- mittels ionisierender Strahlung gehärtet wird.

**11.** Verfahren gemäß Anspruch 10, **dadurch gekennzeichnet, dass** die ionisierende Strahlung Elektronenstrahlung oder UV-Strahlung ist.

## Claims

1. Mixture of a polythiophene preparation which contains a polythiophene salt polythiophene⊕ An⊖ in which the polythiophene contains positively charged and uncharged recurring units of the formula

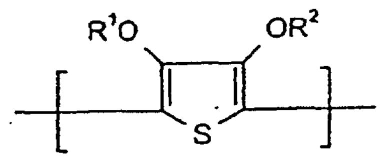

in which

| | |
|---|---|
| $R_1$ and $R_2$ | independently of one another stand for hydrogen or a $C_1$-$C_4$ alkyl group or together form an optionally substituted $C_1$-$C_4$ alkylene radical, preferably a methylene radical optionally substituted with alkyl groups, an ethylene-1,2 radical optionally substituted with $C_1$-$C_{12}$ alkyl groups or phenyl groups, a propylene-1,3 radical or a cyclohexylene-1,2 radical and |
| An⊖ | denotes a polyanion, |

and coating compositions which are curable by ionizing radiation,
coating compositions which are curable by ionizing radiation being (meth)acryloyl group-containing prepolymers which contain per molecule at least two (meth)acryloyl groups.

2. Mixture according to Claim 1, **characterized in that** the (meth)acryloyl group-containing prepolymers contain from two to four (meth)acryloyl groups per molecule.

3. Mixture according to Claim 1 or 2, **characterized in that** the (meth)acryloyl group-containing prepolymers derive from polyesters, polyethers, polyepoxide compounds, aliphatic polyols, polyurethanes and vinyl polymers.

4. Mixture according to at least one of Claims 1 to 3, **characterized in that** the (meth)acryloyl group-containing prepolymers are polyester (meth)acrylates obtained by azeotropic esterification of dicarboxylic acids with polyols having a functionality of two or more and (meth)acrylic acid, reaction products of polyepoxides with (meth)acrylic acid, polyurethane (meth)acrylates or amine-modified polyether acrylates.

5. Mixture according to at least one of Claims 1 to 4, **characterized in that** the coating compositions which are curable by ionizing radiation comprise reactive likewise radiation-curable diluents as auxiliaries.

6. Mixture according to Claim 5, **characterized in that** the reactive likewise radiation-curable diluents are acrylic or methacrylic esters of monohydric to trihydric alcohols or of their oxalkylation products.

7. Mixture according to at least one of Claims 1 to 6, **characterized in that** said mixture contains water as a solvent.

8. Use of the mixture according to at least one of Claims 1 to 7 in order to produce scratch-resistant electrically conductive coatings.

9. Use of the mixture according to at least one of Claims 1 to 7 to produce scratch-resistant electrically conductive coatings, **characterized in that** they have been cured by ionizing radiation.

10. Process for producing a scratch-resistant electrically conductive coating, **characterized in that**

- a mixture in accordance with at least one of Claims 1 to 7 is prepared by mixing the polythiophene preparation and the coating composition which can be cured by ionizing radiation,
- the mixture obtained is then applied to a substrate and
- is cured by means of ionizing radiation.

**11.** Process according to Claim 10, **characterized in that** the ionizing radiation is electron beams or UV radiation.

## Revendications

**1.** Mélange d'une composition de polythiophène qui contient un sel de polythiophène, polythiophène$^{\oplus}$ An$^{\ominus}$, ce polythiophène contenant des motifs répétés à charge positive et non chargés de formule

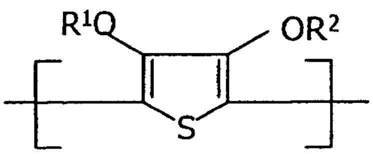

dans laquelle

| | |
|---|---|
| $R_1$ et $R_2$ | représentent chacun, indépendamment l'un de l'autre, l'hydrogène ou un groupe alkyle en $C_1$-$C_4$ ou bien ils forment ensemble un groupe alkylène en $C_1$-$C_4$ éventuellement substitué, de préférence un groupe méthylène substitué le cas échéant par des groupes alkyle, un groupe éthylène-1,2 éventuellement substitué par des groupes alkyle en $C_1$-$C_{12}$ ou phényle, un groupe propylène-1,3 ou un groupe cyclohexylène-1,2, et |
| An$^{\ominus}$ | représente un polyanion |

et d'un produit de revêtement durcissable sous l'action de radiations ionisantes,
ce produit de revêtement durcissable sous l'action de radiations ionisantes consistant en prépolymères contenant des groupes (méth)acryloyle, a au moins deux groupes (méth)acryloyle par molécule.

**2.** Mélange selon la revendication 1, **caractérisé en ce que** les prépolymères contenant des groupes (méth)acryloyle par molécule contiennent deux à quatre groupes (meth)acryloyle par molécule.

**3.** Mélange selon la revendication 1 ou 2, **caractérisé en ce que** les prépolymères contenant des groupes méth) acryloyle dérivent de polyesters, de polyéthers, de composés polyépoxydiques, de polyols aliphatiques, de polyuréthanes et de polymères vinyliques.

**4.** Mélange selon au moins une des revendications 1 à 3, **caractérisé en ce que** les prépolymères contenant des groupes méth)acryloyle sont des polyester(méth)acrylates obtenus par estérification azéotropique d'acides dicarboxyliques par des polyols di- ou polyfonctionnels et l'acide (méth)acrylique), des produits de réaction de polyépoxydes et de l'acide (méth)acrylique, des polyuréthane(méth)acrylates ou des polyéther-acrylates à modification amine.

**5.** Mélange selon au moins une des revendication 1 à 4, **caractérisé en ce que** les produits de revêtement durcissables sous l'action de radiations ionisantes contiennent en tant que produits auxiliaires des diluants réactifs également durcissables sous l'action de radiations.

**6.** Mélange selon la revendication 5, **caractérisé en ce que** les diluants réactifs également durcissables sous l'action de radiations sont des esters acryliques ou méthacryliques d'alcools mono à tri-valents ou de leurs produits d'oxyalkylation.

**7.** Mélange selon au moins une des revendications 1 à 6, **caractérisé en ce que** le solvant qu'il contient est l'eau.

**8.** Utilisation du mélange selon au moins une des revendications 1 à 7 pour l'application de revêtements conducteurs de l'électricité et résistants à l'éraflage.

**9.** Utilisation du mélange selon au moins une des revendications 1 à 7 pour l'application de revêtements conducteurs de l'électricité et résistants à l'éraflage **caractérisée en ce qu'**ils sont durcis sous l'action de radiations ionisantes.

**10.** Procédé pour l'application d'un revêtement conducteur de l'électricité et résistant à l'éraflage, **caractérisé en ce que**

- on prépare un mélange selon au moins une des revendications 1 à 7 par mélange de !a composition de polythiophène et du produit de revêtement durcissable sous l'action de radiations ionisantes,
- on applique ce mélange sur un substrat, et
- on durcit sous l'action de radiations ionisantes.

**11.** Procédé selon la revendication 10, **caractérisé en ce que** la radiation ionisante consiste en un faisceau d'électrons ou un rayonnement UV.